# EUROPÄISCHE PATENTSCHRIFT

(11) **EP 1 318 006 B1**
(45) Veröffentlichungstag und Bekanntmachung des Hinweises auf die Patenterteilung: **22.02.2006**
(21) Anmeldenummer: 02022603.1
(22) Anmeldetag: 09.10.2002
(51) Int. Cl.: B29D 30/30, B29D 30/38, B29D 30/44, B29C 53/80, D02G 3/48, B32B 37/00

(54) **Verfahren und Vorrichtung zum spiralförmigen Aufwickeln eines Verstärkungselements auf einen Luftreifenrohling**
Method and apparatus for spirally winding a reinforcing element onto a tyre carcass
Procédé et dispositif pour enrouler en spirale un élément de renforcement sur une carcasse de pneu

(30) Priorität: 07.12.2001 DE 10160249
(43) Veröffentlichungstag der Anmeldung: 11.06.2003
(73) Patentinhaber: Continental Aktiengesellschaft, 30165 Hannover (DE)
(72) Erfinder: Seevers, Jörn, 31303 Burgdorf (DE); Drews, Marko, 30173 Hannover (DE)

(56) Entgegenhaltungen:
- EP-A- 0 344 928
- EP-A- 0 456 971
- EP-A- 0 524 703
- EP-A- 1 022 118
- EP-A- 1 022 119
- DE-A- 2 055 456
- DE-A- 4 104 087
- GB-A- 1 495 803
- US-A1- 2001 008 158

## Beschreibung

Die Erfindung betrifft ein Verfahren nach Anspruch 1 sowie eine Vorrichtung nach Anspruch 4.

Hierbei wird im allgemeinen unter dem Begriff Verstärkungselement ein faden-, band- oder streifenförmiges Gebilde verstanden, welches allein dem Reifen im Fahrbetrieb die nötige Festigkeit geben soll, also in der Regel als Gürtel unterhalb des Laufstreifens und über der Karkasslage fungiert und als Filament oder Cord aus hochfestem Material, wie Stahlcord oder Aramidcord, ausgebildet ist, oder das Verstärkungselement ist als Bandage ausgebildet, welches die eigentliche Gürtellage abdeckt und in ihrer Lage, insbesondere im kritischen Gürtelkantenbereich, sichert. Bandagen dieser Art werden in der Regel aus Stahlcorden und -filamenten, aus Aramid, aus Polyester-, Nylon oder Polyamidfasern und -corden bestehen, wobei jeweils mehrere Einzelcorde, beispielsweise 2 - 10, zu einem in Kautschuk oder in einer Kautschukmischung eingebetteten Streifen zusammengefaßt werden.

Das Aufspulen beispielsweise der Bandage erfolgt dabei so, dass die Streifen oder Fäden in idealer Betrachtung einen Winkel von nahe 0° zur Umfangsrichtung des Reifens einnehmen. Da die Fäden aber spiral- oder wendelförmig um den Reifen herumgespult werden und parallel zueinander angeordnet sind, ergeben sich leichte Abweichungen vom idealen 0° Winkel, so dass sich in praxi Winkel von 1° bis 10° einstellen lassen.

Mit üblichen Aufspulvorrichtungen und -verfahren lassen sich aber auch andere Topographien und Bilder von Bandagen und anderen Verstärkungen auf dem Reifen einstellen, also beispielsweise mäandrierende Formen, Kreuzlagenverbände, gewinkelte Lagen und dergleichen.

Insbesondere auf dem Gebiet sogenannter High performance Reifen, also Kraftfahrzeugreifen, an welche besondere Anforderungen in Hinblick auf Hochgeschwindigkeitstauglichkeit, Gleichförmigkeit (tire uniformity), Belastbarkeit, Notlaufeigenschaften, und dergleichen gestellt werden, werden Bandangen und andere Verstärkungselemente mit unterschiedlicher Vorspannung über die Laufstreifenbreite des Reifens aufgewickelt. Beispielsweise kann es wünschenswert sein, die Bandage mit einer höheren Spannung um die Gürtelkanten zu spulen als im Zenitbereich des Gürtels, auch, um die beim Bombieren des Reifens entstehende Dehnungs-Spannung im Zenitbereich auszugleichen.

Bei anderen Reifen kann das genaue Gegenteil gewünscht sein; hier wird also das Verstärkungselement mit höherer Spannung im Zenitbereich aufgelegt.

Bei diesen Vorrichtungen und Verfahren ist das genaue und wiederholbare Anlegen von Zugkräften an das Verstärkungselement problematisch. Bekannt ist, beispielsweise durch die EP 0976 537 A3, Bremsrollen an das Verstärkungselemnt anzupressen, wodurch sich unterschiedliche Spannungen einstellen lassen sollen.

Eine gattungsgemäße Vorrichtung und ein entsprechendes Verfahren ist aus der EP 0 288 609 B1 und der EP 0 344 928 A2 bekannt. Auch dort werden Bremsmittel und hiermit verbundene Sensoren und Steuermittel dafür eingesetzt, eine Zugkraft an das Verstärkungselement anzulegen. Ein Verfahren gemäß Oberbegriff des Patentanspruchs 1 ist aus der EP 1022 119 A2 bekannt.

Mit diesen bekannten Vorrichtungen ist es zwar möglich, Zugkräfte an das Verstärkungselement anzulegen; das im Bedarfsfalle spannungsfreie Aufspulen des Verstärkungselementes auf den Reifenrohling, nachdem zuvor eine Zugkräfte angelegt war, bereitet jedoch Probleme. Anders formuliert: die exakte Regelung von Spannen und Entspannen des Verstärkungselementes ist bislang in keinem befriedigendem Maße möglich. Als weiteres bekanntes Problem ist zu nennen, das beim Anfahren bekannter Vorrichtungen kein spannungsfreies Aufspulen des Verstärkungselementes erreichbar ist, da beim Anfahren üblicher Vorrichtungen immer unterschiedliche Zugkräfte am Verstärkungselement anliegen. Dies ist darauf zurückzuführen, dass beim Anfahren derartiger Vorrichtungen die Reifen- oder Gürtelaufbautrommel in Rotation versetzt wird, wobei das Verstärkungselement beginnt, sich auf die Gewebelage bzw. auf die Reifen- oder Gürtelaufbautrommel aufzuwickeln, während das antriebslose Spulrad noch in seiner Ruheposition verharrt, bis das Trägheitsmoment des Spulrades überwunden ist und es zu rotieren beginnt. In dieser Phase also treten Spannungen am Verstärkungselement auf, die nur schwer oder gar nicht zu kontrollieren sind.

Aufgabe der Erfindung ist es, ein Verfahren ubd eine Vorrichtung der eingangs geschilderten Art zu schaffen, durch welche am Verstärkungselement anliegende Zugkräfte exakt kontrollierbar und einstellbar sind.

Die Aufgabe wird mit einer Vorrichtung der geschilderten Gattung dadurch gelöst, dass das Spulrad mit einem Motor verbunden ist, durch welchen das Spulrad antreibbar oder bremsbar ist, wobei wenigstens zwei Spann- und Führungsprollen 50 im radialen Abstand zum Spulrad angeordnet sind, dass das über das Spulrad geführte Verstärkungselement einen definierten Umschlingungswinkel bildet.

Die Aufgabe zur Bereitstellung eines oben dargestellten Verfahrens wird dadurch gelöst, dass das Spulrad in Abhängigkeit der einzustellenden Zugkraft des Verstärkungselements gebremst oder angetrieben wird, wodurch eine Zugkraft am Verstärkungselement von 0 - 500 N, vorzugsweise von 0 - 100 N angelegt wird.

Den erfindungsgemäßen Lösungen liegt jeweils die überraschende Erkenntnis zugrunde, dass sich die eingangs geschilderten Probleme dadurch lösen lassen, dass das Verstärkungselement nicht nur gebremst, sondern auch angetrieben werden kann.

Durch diese Lösung läßt sich die am Verstärkungselement anliegende Zugkraft exakt einstellen; es gibt hier also kein "Nachlaufen" mehr durch Trägheitsmomente, welche das Einstellen von Zugkräften bzw. die Regelabfolge Spannen/Entspannen nur schwer kontrollierbar machen. Wenn das Verstärkungselement aktiv oder passiv angetrieben wird, läßt sich Vorschub erzeugen, durch welchen das Verstärkungselement auch bei Anfahren der Vorrichtung bzw. beim Durchführen des Verfahrens völlig spannungslos auf den Gürtelrohling aufgespult werden kann.

In einer vorteilhaften Weiterbildung der Erfindung kann vorgesehen sein, dass das über das Spulrad geführte Verstärkungselement einen Umschlingungswinkel von wenigstens 180° bildet.

In einer praktischen Ausgestaltung der Erfindung kann vorgesehen sein, dass der Motor ein Servomotor ist, wobei weiter vorgesehen sein kann, dass die Sensoren Druck- oder Pivotsensoren sind.

In Weiterbildungen der das Verfahren betreffenden Erfindung kann vorgesehen sein, dass das Spulrad mit einer höheren Geschwindigkeit als die Reifen- oder Gürtelaufbautrommel betrieben wird, wodurch eine kontrollierte Fältelung des auf die Gürtelaufbautrommel auftreffenden Verstärkungselements erzielt wird.

Desweiteren kann das Verfahren dadurch weitergebildet werden, dass das Verhältnis zwischen Drehzahl der Reifen- oder Gürtelaufbautrommel zur Drehzahl des Spulrades so eingestellt wird, dass das Verstärkungselement mit einer Geschwindigkeit von 1 - 300 m/min auf die Reifen- oder Gürtelaufbautrommel auftrifft.

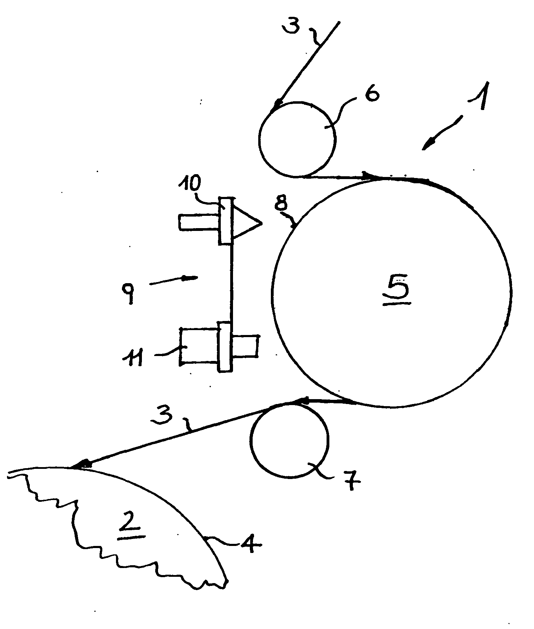

Die Erfindung wird näher durch die Beschreibung eines Ausführungsbeispiels, der Zeichnung und durch die Patentansprüche erläutert.

In der Zeichnung ist schematisch und nicht maßstabsgerecht ein Ausführungsbeispiel einer erfindungsgemäßen Vorrichtung 1 zur Durchführung des Verfahrens nach der Erfindung dargestellt. Die Vorrichtung 1 weist eine nur angedeutete Gürtelaufbautrommel 2 auf, auf der typischerweise ein nicht dargestelltes Gürtelpaket, bestehend aus wenigstens zwei Gürtellagen, aufliegt. Es ist aber, insbesondere für Motorradreifen, Fahrradreifen oder Sonderreifen, denkbar, ein dann als Gürtel dienendes Verstärkungselement 3 direkt auf eine Karkasslage aufzuspulen.

Im Abstand zur Mantelfläche 4 der Gürtelaufbautrommel 2 ist ein Spulrad 5 angeordnet, über welches das Verstärkungselement 3 in Reib- oder Formschluß geführt wird. Spann-und Führungsrollen 6, 7 sind so im radialen Abstand zur Mantelfläche 8 des Spulrads 5 angeordnet, dass sich ein Umschlingunswinkel des Verstärkungselements 3 zur Mantelfläche 8 des Spulrades von wenigstens 180° ergibt. Dies hat sich als vorteilhaft erwiesen, da hierdurch ein exaktes Einstellen von Zugkräften am Verstärkungselement 3 erst ermöglicht wird.

Das Spulrad 5 ist mit einem nicht dargestellten. Servomotor verbunden, durch welchen das Spulrad 5 gebremst oder angetrieben werden kann. Eine antreibende Rotation des Spulrades 5 ergibt in Verbindung mit den Spann- und Führungsrollen 6,7 einen Vortrieb des Verstärkungselements 3, so dass dieses spannungslos oder sogar mit Vorschub auf die Gürtelaufbautrommel 2 aufläuft.

Eine Sensoranordnung 9, bestehend aus einem Pivotsensor 10 und einem Drucksensor 11, steht in Wirkverbindung mit der Gürtelaufbautrommel 2. Die Sensoranordnung 9 führt eine redundante Kraftmessung durch; gewonnene Werte werden direkt einer Steuer- und Regeleinrichtung zugeführt, welche diese Werte mit vorgegebenen Sollwerten abgleicht und im Bedarfsfalle die Drehzahl des Motors absenkt (wodurch eine Bremsung des Verstärkungselements bewirkt wird) oder anhebt.

Es können auch weitere Sensoren verwendet werden. Beispielsweise kann auch die Gürtelaufbautrommel 2 mit entsprechenden Sensoren versehen sein, so dass Drehzahländerungen auch durch Korrelationen der Drehzahlen von Gürtelaufbautrommel 2 und Spulrad 5 bewirkt werden können.

### Bezugszeichenliste

(ist Teil der Beschreibung)
- 1: Vorrichtung
- 2: Gürtelaufbautrommel
- 3: Verstärkungselement
- 4: Mantelfläche
- 5: Spulrad
- 6: Spann- und Führungsrolle
- 7: Spann- und Führungsrolle
- 8: Mantelfläche
- 9: Sensoranordnung
- 10: Pivotsensor
- 11: Drucksensor

## Patentansprüche

1. Verfahren zum spiralförmigen Aufwickeln eines im Wesentlichen streifenförmigen Verstärkungselements (3) auf wenigstens eine Gewebelage eines Laufstreifenrohlings, bei welchem das Verstärkungselement über ein Spulrad (5) auf eine rotierende Reifen- oder Gürtelaufbautrommel (2) aufgewickelt wird, wobei Zugkräfte an das Verstärkungselement (3) angelegt werden, insbesondere **dadurch**, dass das Verstärkungselement (3) beim Aufwickeln auf die Reifen- oder Gürtelaufbautrommel (2) gebremst wird, wobei die am Verstärkungselement (3) anliegende Zugkraft gemessen und entsprechend vorgegebener Parameter beibehalten oder verändert wird,
**dadurch gekennzeichnet, dass**
das Spulrad (5) in Abhängigkeit der einzustellenden Zugkraft des Verstärkungselements (3) gebremst oder angetrieben wird, wodurch eine Zugkraft am Verstärkungselement (3) von 0 - 500 N, vorzugsweise von 0 - 100 N angelegt wird, wobei beim Anfahren der Gürtelaufbautrommel (2) das Spulrad (5) angetrieben wird.

2. Verfahren nach Anspruch 1, **dadurch gekennzeichnet, dass** das Spulrad (5) mit einer höheren Geschwindigkeit als die Reifen- oder Gürtelaufbautrommel (2) betrieben wird, wodurch eine kontrollierte Fältelung des auf die Gürtelaufbautrommel (2) auftreffenden Verstärkungselements (3) erzielt wird.

3. Verfahren nach Anspruch 1 oder 2, **dadurch gekennzeichnet, dass** das Verhältnis zwischen Drehzahl der Reifen- oder Gürtelaufbautrommel (2) zur Drehzahl des Spulrades (5) geregelt wird, wobei das Verstärkungselement (3) mit einer Geschwindigkeit von 1 - 300 m/min auf die Reifen- oder Gürtelaufbautrommel (2) auftrifft.

4. Vorrichtung (1) zur Durchführung des Verfahrens nach wenigstens einem der Ansprüche 1-3, umfassend eine rotierende Reifen- oder Gürtelaufbautrommel (2), einem der Reifen- oder Gürtelaufbautrommel (2) vorgelagertem Spulrad (5), welches mit Mitteln zum Anlegen von Zugkräften an das Verstärkungselement (3) in Verbindung steht, und mit Sensoren (10; 11), welche die Position des Verstärkungselements (3) auf dem Spulrad (5) und die an das Verstärkungselement (3) anliegende Zugkraft erfassen und an eine Steuerungseinrichtung weiterleiten, **dadurch gekennzeichnet, dass** das Spulrad (5) mit einem Motor verbunden ist, durch welchen das Spulrad (5) antreibbar oder bremsbar ist, wobei wenigstens zwei Spann- und Führungsrollen (6, 7) im radialen Abstand zum Spulrad (5) angeordnet sind, wobei das über das Spulrad (5) geführte Verstärkungselement (3) einen definierten Umschlingungswinkel bildet.

5. Vorrichtung nach Anspruch 4, **dadurch gekennzeichnet, dass** das über das Spulrad (5) geführte Verstärkungselement (3) einen Umschlingungswinkel von wenigstens 180° bildet.

6. Vorrichtung nach Anspruch 4 oder 5, **dadurch gekennzeichnet, dass** der Motor ein Servomotor ist.

7. Vorrichtung nach wenigstens einem der Ansprüche 4 - 6, **dadurch gekennzeichnet, dass** wenigstens ein Sensor ein im Abstand zum Spulrad (5) angeordneter Drucksensor (11) ist.

8. Vorrichtung nach wenigstens einem der Ansprüche 4 - 7, **dadurch gekennzeichnet, dass** wenigstens ein Sensor ein im Abstand zum Spulrad (5) angeordneter Pivotsensor (10) ist.

## Claims

1. Method for spirally winding a substantially strip-shaped reinforcing element (3) onto at least one fabric ply of a tread rubber carcass, in which the reinforcing element is wound onto a rotating tyre or belt building drum (2) via a spool wheel (5), tensile forces being applied to the reinforcing element (3), in particular by the reinforcing element being braked during winding onto the tyre or belt building drum (2), the tensile force applied to the reinforcing element (3) being measured and maintained or changed in accordance with predetermined parameters, **characterized in that** the spool wheel (5) is braked or driven in dependence on the tensile force to be set of the reinforcing element (3), whereby a tensile force of 0 - 500 N, preferably of 0 - 100 N, is applied to the reinforcing element (3), the spool wheel (5) being driven when the belt building drum (2) is started up.

2. Method according to Claim 1, **characterized in that** the spool wheel (5) is operated at a higher speed than the tyre or belt building drum (2), thereby achieving a controlled shirring of the reinforcing element (3) impinging on the belt building drum (2).

3. Method according to Claim 1 or 2, **characterized in that** the ratio between the rotational speed of the tyre or belt building drum (2) and the rotational speed of the spool wheel (5) is regulated, the reinforcing element (3) impinging on the tyre or belt building drum (2) at a speed of 1 - 300 m/min.

4. Apparatus (1) for carrying out the method according to at least one of Claims 1-3, comprising a rotating tyre or belt building drum (2), a spool wheel (5), which is arranged upstream of the tyre or belt building drum (2) and is in connection with means for applying tensile forces to the reinforcing element (3), and with sensors (10; 11), which sense the position of the reinforcing element (3) on the spool wheel (5) and the tensile force applied to the reinforcing element (3) and pass them on to a control device, **characterized in that** the spool wheel (5) is connected to a motor, by which the spool wheel (5) can be driven or can be braked, at least two tensioning and guiding rollers (6, 7) being arranged at a radial distance from the spool wheel (5), the reinforcing element (3) that is led over the spool wheel (5) forming a defined angle of wrap.

5. Apparatus according to Claim 4, **characterized in that** the reinforcing element (3) that is led over the spool wheel (5) forms an angle of wrap of at least 180°.

6. Apparatus according to Claim 4 or 5, **characterized in that** the motor is a servo motor.

7. Apparatus according to at least one of Claims 4 - 6, **characterized in that** at least one sensor is a pressure sensor (11) arranged at a distance from the spool wheel (5)

8. Apparatus according to at least one of Claims 4 - 7, **characterized in that** at least one sensor is a pivot sensor (10) arranged at a distance from the spool wheel (5).

## Revendications

1. Procédé pour enrouler en spirale un élément de renfort (3) essentiellement en forme de ruban sur au moins une couche de tissu d'une ébauche de bande de roulement, dans lequel l'élément de renfort est enroulé par l'intermédiaire d'une roue de bobinage (5) sur un tambour rotatif (2) de formation d'un bandage ou d'une ceinture, dans lequel des forces de traction sont exercées sur l'élément de renfort (3), en particulier par le fait que lors de son enroulement sur le tambour (2) de formation de bandage ou de ceinture, l'élément de renfort (3) est freiné, la force de traction appliquée sur l'élément de renfort (3) étant mesurée et des paramètres prédéterminés étant maintenus ou modifiés de manière appropriée,
**caractérisé en ce que** la roue de bobinage (5) est freinée ou entraînée en fonction de la force de traction qui doit être appliquée sur l'élément de renfort (3), ce qui applique sur l'élément de renfort (3) une force de traction de 0 à 500 N et de préférence de 0 à 100 N, la roue de bobinage (5) étant entraînée lors du démarrage du tambour (2) de formation de ceinture.

2. Procédé selon la revendication 1, **caractérisé en ce que** la roue de bobinage (5) est entraînée à une vitesse plus élevée que le tambour (2) de formation de bandage ou de ceinture, ce qui permet d'obtenir un plissage contrôlé de l'élément de renfort (3) qui aboutit sur le tambour (2) de formation de ceinture.

3. Procédé selon les revendications 1 ou 2,
**caractérisé en ce que** le rapport entre la vitesse de rotation du tambour (2) de formation de bandage ou de ceinture est réglée sur la vitesse de rotation de la roue de bobinage (5), l'élément de renfort (3) aboutissant sur le tambour (2) de formation de bandage ou de ceinture à une vitesse de 1 à 300 m/min.

4. Dispositif (1) en vue de la mise en oeuvre du procédé selon au moins l'une des revendications 1 à 3, qui comprend un tambour rotatif (2) de formation de bandage ou de ceinture, une roue de bobinage (5) montée en amont du tambour (2) de formation de bandage ou de ceinture et reliée à des moyens d'application de forces de traction sur l'élément de renfort (3), des détecteurs (10; 11) qui détectent la position de l'élément de renfort (3) sur la roue de bobinage (5) et la force de traction appliquée sur l'élément de renfort (3) et les transmettent à un dispositif de commande,
**caractérisé en ce que** la roue de bobinage (5) est reliée à un moteur par lequel la roue de bobinage (5) peut être entraînée ou freinée, au moins deux galets de serrage et de guidage (6, 7) étant disposés à distance radiale de la roue de bobinage (5), l'élément de renfort (3) guidé sur la roue de bobinage (5) formant un angle d'enroulement défini.

5. Dispositif selon la revendication 4, **caractérisé en ce que** l'élément de renfort (3) guidé par la roue de bobinage (5) forme un angle d'enroulement d'au moins 180°.

6. Dispositif selon les revendications 4 ou 5,
**caractérisé en ce que** le moteur est un servomoteur.

7. Dispositif selon au moins l'une des revendications 4 à 6, **caractérisé en ce qu'**au moins un détecteur est un détecteur de pression (11) disposé à distance de la roue de bobinage (5).

8. Dispositif selon au moins l'une des revendications 4 à 7, **caractérisé en ce qu'**au moins un détecteur est un détecteur de pivotement (10) disposé à distance de la roue de bobinage (5).
